# EUROPEAN PATENT APPLICATION

(11) **EP 1 728 809 A2**
(43) Date of publication of application: **06.12.2006**
(21) Application number: 06011377.6
(22) Date of filing: 01.06.2006
(51) Int. Cl.: C08G 18/80, C08G 18/42, C09D 175/04, B60J 10/00

(54) **Weatherstrip coating**

(30) Priority: 05.06.2005 US 146267
(71) Applicant: National Starch and Chemical Investment Holding Corporation, New Castle, Delaware 19720 (US)
(72) Inventor: Dewitt, Julie A., Fort Gratiot, Michigan 48059 (US); Rahim, Marufur, Fort Gratiot, Michigan 48059 (US)
(74) Representative: Held, Stephan

(57) **Abstract**

A coating for weatherstrips, windshield wipers, door seals, trunk seals, sunroof seals, windshield seals and the like. The coating is a high viscosity, one component, high solids, solvent based, co-extrudable coating that is based on an aliphatic blocked isocyanate or mixture of aliphatic and aromatic blocked isocyanates that react with a polyester polyol or mixture of polyester and acrylic polyols. The coating has the required high viscosity for application to the rubber substrate at the die head. The coating provides excellent weathering resistance, solvent resistance, low noise and good ice release.

## Description

### FIELD OF THE INVENTION

The present invention relates to a high viscosity coating for use in weatherstripping, windshield wiper blades, sunroof seals and similar applications, that may be applied to an extruded rubber at the die head.

### BACKGROUND OF THE INVENTION

Rubber for use in weatherstripping and related applications is commonly shaped and formed via an extrusion process. Coatings to provide improved performance properties are not applied at the die head but are commonly applied to the extruded rubber material via various methods, such as spraying, at some point after the uncoated rubber emerges from the die and has been cured by passing through a curing oven. Such existing coatings are required to have relatively low viscosities, usually in the range of about 50 cps to about 250 cps to facilitate their application via the spraying and drip and drag coating methods currently utilized. These existing coating methods do not maximize the utilization of the coating on the extruded rubber. Further, because current coating methods require the application of the coating after the curing of the rubber, a second set of curing ovens is required to cure the coated rubber weatherstrip.

It would be advantageous to develop a coating for use on weatherstrips, windshield wipers, sunroof and other automotive seals and the like that is capable of being applied at the die head and would provide the beneficial properties of existing coatings. Such a coating must provide good solvent resistance, high weather resistance, good ice release characteristics and low noise. The coating must be capable of application on the types of rubber most commonly utilized for weatherstripping and similar applications, including thermoplastic olefin compounds (TPO), thermoplastic vulcanate compounds (TPV) and ethylene-propylene-diene-terpolymers (EPDM).

### SUMMARY OF THE INVENTION

The present invention concerns a coating for weatherstrips, windshield wipers, door seals, trunk seals, sunroof seals, windshield seals and the like. The coating is a high viscosity, one component, high solids, solvent based, co-extrudable coating that is based on an aliphatic blocked isocyanate or mixture of aliphatic and aromatic blocked isocyanates that react with a polyester polyol or mixture of polyester and acrylic polyols. The coating has the required high viscosity for application to the rubber substrate at the die head. The coating provides excellent weathering resistance, solvent resistance, low noise and good ice release.

### DETAILED DESCRIPTION OF THE PREFERRED EMBODIMENTS

The present invention describes a coating having improved properties, such as weathering resistance, for use in weatherstrips, windshield wipers, outer belts and the like, and is applied to the rubber substrate at the die head following extrusion. While the term "weatherstrip" is used throughout this application, it is to be understood that the coating of the present invention may be utilized in any and all related applications including windshield wipers, outer belts, door seals, trunk seals, sunroof seals, windshield seals and the like. Coatings such as those of the present invention can also act to eliminate flock for glass channel run. Coatings suitable for application at the die head must have a high viscosity in the range of about 1000 - 20,000 cps and preferably in the range of about 3000 - 10,000 cps. The coatings of the present invention are achieved via a combination of an aliphatic blocked isocyanate or a mixture of aliphatic and aromatic blocked isocyanate, polyester polyol or a blend of polyester and acrylic polyol and a matting agent. Additional ingredients, such as silicone resin and adhesion promoters may also be included.

The coating of the present invention must have sufficient viscosity to enable its application onto the rubber at the die head which is the point at which the extruded rubber substrate emerges from the die. To apply the coating, a coating block is located adjacent to the die head. The coating block contains one or more cavities that are capable of holding and dispensing the liquid coating on selected surfaces of the extruded substrate. The coating block preferably conforms to the shape of the extruded substrate in order to provide an efficient coating.

The formulation of the present invention comprises blocked isocyanate crosslinking agent that is either an aliphatic isocyanate or a mixture of aliphatic and aromatic isocyanates. The crosslinking agent acts as a binder to control the viscosity of the composition and provides enhanced weather resistance, solvent resistance, flexibility and adhesion properties to the coated weatherstrip. The blocked isocyanate further provides safer handling and environmental conditions than an unblocked isocyanate. The blocked isocyanate is based on an HDI biuret, HDI trimer or IPDI trimer that is blocked with pyrazoles, caprolactams, oximes, phenols, malonates or alcohols. Aliphatic blocked isocyanates include TRIXENE BI17950, BI17951, BI7960, BI17963, and others commercially available from Baxenden, and other materials commercially available from Rhodia, Bayer and BASF. Aromatic blocked isocyanates are commercially available from Rhodia, Bayer and BASF.

Polyester polyols or blends of polyester and acrylic polyols act as a binder to aid in the control of the viscosity of the composition. The polyols provide the properties of improved weather resistance, solvent resistance, flexibility and adhesion to the coating. Polyester polyols suitable for the coating of the invention are commercially available from Uniqema under the PRIPLAST trademark, such as PRIPLAST 3187, 3190, 3191, 3192, 3195 and 3197, and others commercially available from Reichhold, Akzo Nobel and King Industries. Acrylic polyols suitable for the coating of the invention are commercially available from Bayer, Cognis and Lyondell.

Various matting agents, including polyurea, silica, nylon, talc and mixtures thereof may be utilized. The matting agents aids in the abrasion resistance of the coating. A preferred matting agent is CERAFLOUR, commercially available from Byk Chemie or PERGOPAK, commercially available from Martinswerk. Additional suitable matting agents are commercially available from Grace Davison, Luzenac, Elf Atochem and Degussa.

Optionally, a silicone resin may also be added to the composition. The silicone resin component of the coating preferably has a high molecular weight in the range of about 1,000 to about 800,000 with a viscosity in the range of about 15,000 cps to about 700,000 cps. The silicone resin provides slip which improves abrasion resistance, noise resistance and ice release. A blend of silicone resins having different molecular weights may be utilized. One such blend would have three silicone resins having molecular weights in the ranges of about 1,000 to about 2,500, about 5,000 to about 20,000 and about 400,000 to about 800,000. High molecular weight silicone resins that may be utilized for this purpose include polydimethylsiloxane which is commercially available from Dow Corning, Shin-Etsu Chemical, GE Silicones, Wacker Silicone and Goldschmidt Chemical Corporation.

An adhesion promoter may optionally be utilized to improve the adhesion of the composition to the substrate. A preferred adhesion promoter is modified chlorinated polyolefin which is commercially available as CP 164-1 25% in xylene from Eastman Chemical Company. Additional suitable adhesion promoters are commercially available from Eastman Chemical Company and Degussa.

Other ingredients may also optionally be added to the composition. Included are one or more solvents, such as butyl acetate, pm acetate, toluene or xylene, which act as a carrier and are used to control the viscosity of the composition. A silicone or non-silicone surfactant may be utilized to wet out the substrate and aid with the flow of the composition. Suitable surfactants include BYK 306, commercially available from Byk Chemie, and others commercially available from Air Products Corporation and Goldschmidt Chemical Corporation. High UV stabilizers and absorbers may be added to aid in weathering resistance. Among the high UV stabilizers and absorbers that may be utilized are TINUVIN, commercially available from Ciba Specialty Chemicals Corp. and CHISORB, commercially available from Chitec.

Additional additives, such as curing agents, pigments, wetting agents, catalysts, amines, co-solvents, and cross linkers, may also be added as desired. Useful curing agents and cross linkers include, but are not limited to, epoxy, melamine, polyisocyanate, polyaziridine, isocyanate, blocked isocyanate, aziridine, melamine-formaldehyde and urea formaldehyde or mixtures thereof.

The composition of the present invention contains from about 10 to about 80 weight percent, and preferably from about 20 to about 40 weight percent polyester polyol or a blend of polyester and acrylic polyol; from about 10 to about 80 weight percent, and preferably from about 20 to about 40 weight percent aliphatic blocked isocyanate or a blend of aliphatic and aromatic blocked isocyanate and from about 2 to about 30, and preferably from about 5 to about 20 weight percent matting agent. Further included may be from about 2 to about 40 weight percent, and preferably from about 5 to about 20 weight percent high molecular weight silicone, from about 1 to about 30 weight percent, and preferably from about 5 to about 15 weight percent solvent, and from about .005 to about 5 weight percent, and preferably from about 0.05 to about 2 weight percent surfactant. An adhesion promoter, in the range of from about 0.05 to about 20 weight percent, and preferably about .05 to about 5 weight percent may also be added. Optionally, high UV stabilizers, absorbers or mixtures thereof may be added in the range of from about 0.05 to about 10 weight percent and preferably from about 1 to about 5 weight percent. Additional other additives, such as pigments, curing agents, wetting agents, catalysts, amines, co-solvents and cross-linkers may optionally be added and comprise in the range of about 1 weight percent to about 40 weight percent of the coating and preferably in the range of about 1 weight percent to about 25 weight percent of the coating.

To form the coating of the present invention, the aliphatic blocked isocyanate is reacted with the polyester or acrylic polyol to form the polyurethane coating. The isocyanate unblocks at 120°C and begins to react with the hydroxyl groups on the polyol to form the polyurethane. The polyurethane provides flexibility, toughness, weathering resistance and solvent resistance to the weatherstrip. The matting agent, preferably micronized polyurea, is added to improve abrasion resistance and to control gloss and viscosity. Optionally, an adhesion promoter is added to improve adhesion to the substrate. If necessary to aid in the control of the viscosity, a small amount of solvent, preferably butyl acetate, may be added. The solvent should be limited so as to maintain the higher solids content of the composition and to minimize the volatile organic compounds content. Preferably, a surfactant is added to allow the coating to wet out the substrate, to improve the flow of the coating and the adhesion to the substrate. A high UV stabilizer or absorber, or mixture thereof, may be added to improve the weathering resistance of the coating. The high molecular weight silicone resin may optionally be added to provide slip to improve abrasion resistance, noise resistance, and ice release. Pigments, such as carbon black and phthalo blue may be added to provide the color to match the substrate.

The coating of the present invention is capable of application to the rubber substrate directly at or adjacent to the die head from which the substrate is extruded. With such application, the substrate and the coating are cured together when the unit is placed into a curing oven. Due to the co-curing of the substrate and coating, the coating must be capable of maintaining its film integrity and adhesion to the substrate in the event that the substrate expands during the curing. Because of the direct application, waste caused by spraying and other indirect methods is eliminated. Generally, spray application is only about 40 - 70% efficient, while in die application is virtually 100% efficient. Application costs are reduced due to the elimination of the need for a separate oven for curing a later applied coating, resulting in faster manufacturing times due to short lines and also energy savings. The direct application also eliminates the need for pretreatment of the substrate before application of the coating in certain applications. Because of the high solids content, the volatile organic compounds content is much lower than that of solvent-based coatings and similar to that of waterborne coatings.

The following example is for illustrative purposes only and is not intended to limit the scope of the invention.
Example: A sample formulation was made by the process. Polyester polyol and aliphatic blocked isocyanate were mixed together at medium speed for 10 minutes using a Cowles blade. Solvent was then added and the composition was mixed for an additional 5 minutes. Next, the adhesion promoter, UV stabilizers and surfactant were added and the composition was mixed for 10 minutes. The high molecular weight silicone resin was then added and the composition was mixed at high speed for 30 minutes. The matting agent was slowly sifted into the composition and mixed for 20 minutes. Finally, the carbon black and phthalo blue colorants were added and mixed for 10 minutes at medium speed. The ingredients are shown in Table 1.

**Table 1. Weatherstrip Coating Formulation**

| Ingredient | Weight Percent |
|---|---|
| Polyester Polyol¹ | 32.55 |
| Aliphatic Blocked Isocyanate² | 31.78 |
| Solvent³ | 8.62 |
| Adhesion Promoter⁴ | 2.87 |
| Silicone Surfactant⁵ | 0.20 |
| UV Stabilizer⁶ | 2.00 |
| High Molecular Weight Silicone Emulsion⁷ | 7.85 |
| Polyurea Matting Agent⁸ | 11.29 |
| Carbon Black | 1.93 |
| Phthalo Blue | 0.91 |

| | |
|---|---|
| ¹PRIPLAST ²TRIXENE ³Butyl Acetate ⁴CP 164-1 25% in xylene ⁵BYK 306 ⁶TINUVIN ⁷ polydimethylsiloxane ⁸CERAFLOUR 920 | |

The coating of Table 1 was tested and the results are illustrated in Table 2.

**Table 2. Coating Properties**

| Property | Test Result |
|---|---|
| Solids Content | 76% |
| Viscosity | 5000 cps |
| Volatile Organic Compound Content | 222 g/L |

As shown in Table 2, the composition of the invention provides a high solids, high viscosity coating. The high viscosity of the coating renders it suitable for application to a substrate directly at an extrusion die head.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. An extrudable coating comprising one or more aliphatic blocked isocyanates or a mixture of aliphatic and aromatic blocked isocyanates, one or more polyester polyols or a mixture of polyester and acrylic polyols and one or more matting agents.

2. The coating of claim 1, further comprising one or more high molecular weight silicone resins.

3. The coating of claim 1, further comprising one or more adhesion promoters.

4. The coating of claim 1, further comprising one or more solvents.

5. The coating of claim 1, further comprising one or more of the group consisting of high UV stabilizers, high UV absorbers, silicone surfactants, non-silicone surfactants, curing agents, pigments, wetting agents, catalysts, amines, co-solvents, cross linking agents or mixtures thereof.

6. The coating of claim 1, wherein the coating has a viscosity in the range of about 1000 - 20,000 cps.

7. The coating of claim 6, wherein the coating has a viscosity in the range of about 3000 -10,000 cps.

8. The coating of claim 1, wherein the matting agent is selected from the group consisting of polyurea, silica, nylon, talc and mixtures thereof.

9. The coating of claim 4, wherein the solvent is butyl acetate.

10. The coating of claim 3, wherein the adhesion promoter is modified chlorinated polyolefin.

11. The coating of claim 2, wherein the one or more high molecular weight silicone resins comprise a blend of silicone resins having molecular weights in the range of about 1,000 to about 2,500; about 5,000 to about 20,000; and about 400,000 to about 800,000.

12. The coating of claim 2, wherein the high molecular weight silicone resin comprises polydimethylsiloxane.

13. The coating of claim 1, wherein the one or more aliphatic blocked isocyanates or mixture of aliphatic and aromatic blocked isocyanates comprise from about 10 to about 80 weight percent of the coating.

14. The coating of claim 13, wherein the one or more aliphatic blocked isocyanates or mixture of aliphatic and aromatic blocked isocyanates comprise from about 20 to about 40 weight percent of the coating.

15. The coating of claim 1, wherein the one or more polyester polyols or mixture of polyester and acrylic polyols comprise from about 10 to about 80 weight percent of the coating.

16. The coating of claim 15, wherein the one or more polyester polyols or mixture of polyester and acrylic polyols comprise from about 20 to about 40 weight percent of the coating.

17. The coating of claim 1, wherein the one or more matting agents comprise from about 2 to about 30 weight percent of the coating.

18. The coating of claim 17, wherein the one or more matting agents comprise from about 5 to about 20 weight percent of the coating.

19. The coating of claim 2, wherein the one or more high molecular weight silicone resins comprise from about 2 to about 40 weight percent of the coating.

20. The coating of claim 19, wherein the one or more high molecular weight silicone resins comprise from about 5 to about 20 weight percent of the coating.

21. The coating of claim 3, wherein the one or more adhesion promoters comprise from about 0.05 to about 20 weight percent of the coating.

22. The coating of claim 21, wherein the one or more adhesion promoters comprise from about 0.05 to about 5 weight percent of the coating.

23. The coating of claim 4, wherein the one or more solvents comprise from about 1 to about 30 weight percent of the coating.

24. The coating of claim 23, wherein the one or more solvents comprise from about 5 to about 15 weight percent of the coating.

25. The coating of claim 5, wherein the high UV stabilizers, high UV absorbers or mixture thereof comprises from about 0.05 to about 10 weight percent of the coating.

26. The coating of claim 25, wherein the high UV stabilizers, high UV absorbers or mixture thereof comprises from about 1 to about 5 weight percent of the coating.

27. The coating of claim 1, wherein the coating has sufficient viscosity to be applied to a substrate extruded from a die at a location adjacent to the point at which the substrate emerges from the die.
